**Europäisches Patentamt**

**European Patent Office**

**Office européen des brevets**

(19)

(11) Numéro de publication : **0 482 236 B1**

(12)

# FASCICULE DE BREVET EUROPEEN

(45) Date de publication du fascicule du brevet :
**23.02.94 Bulletin 94/08**

(51) Int. Cl.⁵ : **A23F 5/26**

(21) Numéro de dépôt : **90120388.5**

(22) Date de dépôt : **24.10.90**

(54) **Procédé pour la production de café instantané soluble en poudre.**

(43) Date de publication de la demande :
**29.04.92 Bulletin 92/18**

(45) Mention de la délivrance du brevet :
**23.02.94 Bulletin 94/08**

(84) Etats contractants désignés :
**AT BE CH DE DK ES FR GB GR IT LI LU NL SE**

(56) Documents cités :
**FR-A- 2 126 170**
**FR-A- 2 347 074**

(73) Titulaire : **SOCIETE DES PRODUITS NESTLE S.A.**
**Case postale 353**
**CH-1800 Vevey (CH)**

(72) Inventeur : **Schlecht, Klaus**
**Ch. Pierrefleur 3**
**CH-1350 Orbe (CH)**

## Description

La présente invention est relative à un procédé pour la production de café instantané soluble en poudre.

La poudre de café soluble est classiquement produite par lyophylisation ou atomisation après l'évaporation d'un extrait de café obtenu par la percolation d'un liquide d'extraction à travers des cellules remplies de café torréfié moulu (Sivetz - Coffee Processing Technology - volume 1 - pages 262, 263 - AVI - 1963).

L'extraction est réalisée à contre courant, c'est-à-dire que de l'eau, sous pression à une température pouvant être comprise entre 150°C et 180°C, est introduite dans la cellule contenant la charge de café torréfié moulu qui a été la plus épuisée en ayant subi N extractions, à la base de celle-ci. L'extrait liquide de cette cellule d'extraction est ensuite amené à traverser la cellule d'extraction contenant la charge de café ayant servi (N-1) fois, cela ainsi de suite jusqu'à ce que l'extrait liquide traverse la cellule qui vient d'être remplie de café torréfié moulu frais.

L'extrait final sort de cette dernière cellule à une température de l'ordre de 100°C.

Ainsi, le café le plus épuisé est soumis à la température la plus élevée alors que le café frais est soumis à la température la plus basse.

On distingue classiquement les cellules chaudes, qui contiennent le café le plus épuisé, des cellules froides, qui contiennent le café le moins épuisé.

A la fin de chaque cycle d'extraction, on vide la cellule contenant le café le plus épuisé, on la remplit de café frais et, après avoir relié convenablement les cellules entre elles, un nouveau cycle d'extraction commence.

Il est connu que plus la température d'extraction est élevée plus le rendement est élevé. Mais en contrepartie, l'utilisation d'une température élevée entraîne des phénomènes d'hydrolyse qui engendrent des composés organoleptiquement désagréables.

Ainsi, l'extrait produit dans les cellules chaudes est il classiquement chargé en composés qui, se retrouvant dans l'extrait final, entraînent ensuite la production d'une poudre de café soluble qui une fois redissoute dans de l'eau chaude présentera un goût marqué d'hydrolyse et de caramel.

FR 2126170 décrit un procédé de préparation d'un extrait de café par passage d'un milieu aqueux et chaud dans une batterie de percolateurs, le procédé étant caractérisé par le fait que l'on concentre l'extrait par évaporation entre 2 percolateurs avant au moins le dernier percolateur de l'étage "frais".

Il a été aussi proposé, comme par exemple dans le document US 4 129 665, d'extraire le café en évaporant partiellement l'extrait issu des cellules chaudes, avant sa réintroduction dans les cellules froides, l'extrait évaporé ayant une température supérieure à 120°C. Plus particulièrement, l'évaporation est réalisée à l'aide d'un évaporateur détendeur constitué d'un dispositif de réduction de pression suivi d'un évaporateur flash.

Par ailleurs, selon ce procédé, il est ajouté à l'extrait qui a subi l'évaporation au moins autant de liquide d'extraction que ce qui a été évaporé.

Selon ce procédé, il est clairement obtenu une amélioration du produit final puisque les goûts d'hydrolyse et de caramel sont nettement diminués.

Pourtant, én contrepartie de ce résultat, il apparaît une diminution concomitante de la force des composés organoleptiquement souhaitables, celle-ci étant d'autant plus marquée que le café traité a été faiblement torréfié.

Un moyen pour pallier cet inconvénient peut être de réduire l'effet du procédé en augmentant la température de l'évaporation flash, mais on obtient alors aussi une moins bonne élimination des composés que l'on veut supprimer.

Le but du procédé selon l'invention est donc de permettre d'éliminer les composés organoleptiquement néfastes en n'obtenant pas une réduction concomitante du goût.

De plus, dans l'art antérieur, même après une phase de filtration de l'extrait final qui tend à éliminer les particules solides du café en suspension qui ont pu être entraînées, il existe aussi des matières solides en suspension telles que des polysaccharides ou des protéines qui doivent être éliminées afin de permettre, après évaporation et lyophilisation ou atomisation de cet extrait, d'obtenir une poudre de café parfaitement soluble et n'engendrant pas l'apparition de matières solides dans la tasse.

Ces matières solides en suspension sont classiquement éliminées par centrifugation, la boue obtenue étant ensuite décantée, le liquide de décantation surnageant étant réintroduit dans l'extrait final filtré alors que le résidu solide obtenu est éliminé.

Ce procédé présente comme inconvénient principal de générer une boue qu'il faut retraiter par décantation et dont la manipulation n'est pas aisée.

Par ailleurs, la centrifugation ne permet pas toujours d'éliminer de façon satisfaisante les matières en suspension.

Un autre but de la présente invention est donc de fournir un procédé du type décrit ci-avant qui de plus réduise la fraction non soluble présente dans l'extrait final.

La présente invention a ainsi pour objet un procédé de production d'un café instantané soluble en poudre dans lequel un liquide d'extraction est amené à percoler à contre-courant à travers des cellules remplies de café torréfié moulu, l'extrait final étant ensuite transformé en poudre, dans lequel un extrait produit par une ou plusieurs cellules chaudes à une température supérieure à 150°C est soumis à une première évaporation de type flash, l'extrait produit étant ensuite réintroduit dans le circuit d'extraction pour subir une seconde évaporation de type flash séparée de la précédente par au moins une cellule d'extraction intermédiaire, le produit de cette évaporation étant ensuite réintroduit dans les cellules froides du circuit d'extraction.

Un autre objet de la présente invention est un procédé du type ci-dessus dans lequel est ajouté du liquide d'extraction après la seconde évaporation et avant la réintroduction dans les cellules froides.

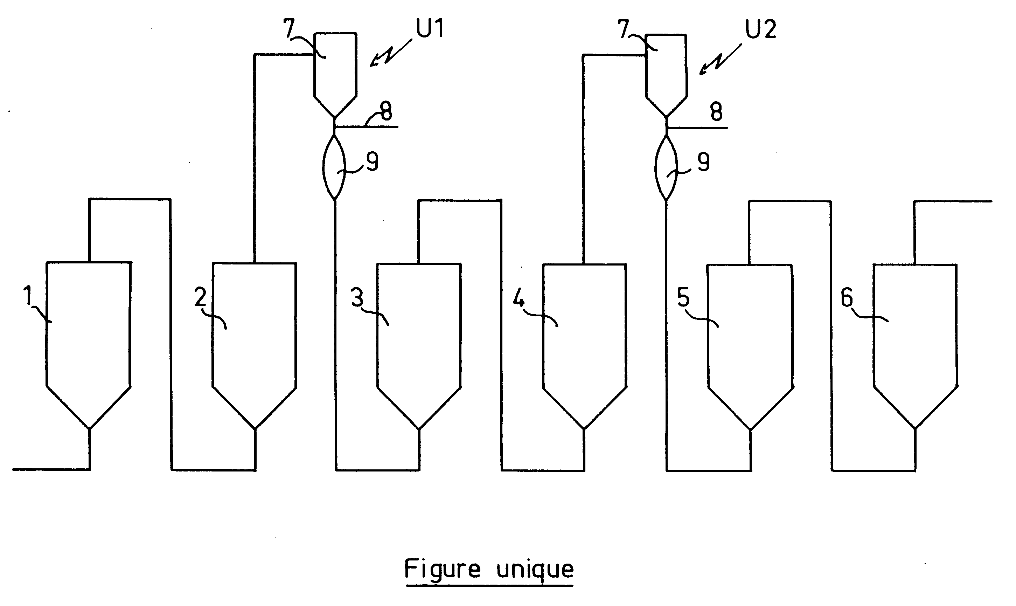

Les autres caractéristiques et avantages de l'invention ressortiront au cours de la description qui va suivre faite en référence au dessin annexé unique donné seulement à titre d'exemple non limitatif et qui représente un dispositif pour la mise en oeuvre du procédé selon l'invention.

Le procédé selon la présente invention consiste essentiellement à éliminer les constituants indésirables aussitôt après leur fabrication en réalisant une évaporation de type flash sur un extrait, dont la température est supérieure à 150°C, produit par les cellules les plus chaudes, puis à réintroduire cet extrait dans le circuit d'extraction.

Une seconde évaporation de type flash est ensuite réalisée, séparée de la précédente par au moins une cellule d'extraction, le produit de cette deuxième opération étant réintroduit dans le circuit d'extraction.

La première évaporation est réalisée à température assez basse, de façon à obtenir un effet maximal, la deuxième évaporation est réalisée à une température plus élevée de façon à éliminer les derniers composés indésirables en évitant par ailleurs une perte des éléments organoleptiquement souhaitables.

C'est ainsi que, préférentiellement, la première évaporation est réalisée à 60°C et la seconde évaporation à 80°C.

La température de la première évaporation permet une forte élimination des arômes d'hydrolyse produits.

De plus, la forte chute de température de l'extrait qui passe de plus de 150°C à 60°C entraîne une bonne sédimentation de la fraction non soluble qui sera ensuite retenue dans les cellules intermédiaires.

La température de la seconde évaporation est considérée comme un optimum entre une élimination satisfaisante des arômes indésirables et une réduction minimale de la force du café.

Grâce à ce procédé, on obtient ainsi une élimination satisfaisante des composés organoleptiquement néfastes en évitant une réduction concomitante du goût.

Par ailleurs, la première évaporation, réalisée immédiatement après les cellules les plus chaudes, entraîne une diminution du volume d'extrait percolant à travers les cellules suivantes.

Cette diminution de volume, et donc de débit, se traduit par une diminution de la vitesse de l'extrait au travers des cellules suivantes qui se comportent alors comme des filtres qui retiennent les matières solides en suspension qui auraient pu être entraînées à partir des cellules chaudes.

Il s'ensuit ainsi une diminution de la fraction non soluble dans l'extrait final.

Malgré tout, les deux évaporations successives entraînent une diminution très importante du débit dans les cellules d'extraction froides. Ceci pénalise l'épuisement qui peut devenir alors insuffisant dans le cadre d'un processus industriel.

Pour pallier cet inconvénient, il convient d'augmenter le débit en aval de la seconde évaporation dans les cellules froides afin d'augmenter le volume d'eau en contact avec le café à extraire dans les dites cellules froides et donc d'augmenter l'épuisement.

Enfin, il est possible de moduler la qualité du produit final en ajoutant une quantité d'eau plus ou moins importante à la sortie de la première évaporation.

Cette addition d'eau, en augmentant le débit dans les cellules intermédiaires, et donc la vitesse de percolation, réduit bien sûr la diminution de la fraction non soluble dans l'extrait final puisque l'effet de filtration dans ces cellules intermédiaires est réduit.

Il est par ailleurs nécessaire de prévoir un réchauffage de l'extrait liquide traité après chaque évaporation afin de remonter sa température à la température d'extraction désirée.

Il va maintenant être décrit un dispositif pour la mise en oeuvre du procédé ci-dessus.

Comme on le voit à la figure unique, un dispositif d'extraction de café est constitué de plusieurs cellules d'extraction, fonctionnant en série, constituées chacune d'une colonne dont la partie inférieure est reliée à la partie supérieure de la colonne qui la précède et dont la partie supérieure est reliée à la partie inférieure de la colonne qui la suit.

Généralement un dispositif d'extraction est constitué de quatre à huit cellules d'extraction et, préférentiellement, de six cellules d'extraction.

La cellule 1 contient le café le plus épuisé tandis que la cellule 6 contient le café le moins épuisé, le niveau

3

d'épuisement diminuant de la cellule 1 vers la cellule 6.

Le liquide d'extraction, qui peut être constitué par de l'eau sous pression à une température comprise entre 150°C et 180°C, arrive par le bas de la cellule 1, traverse cette cellule de bas en haut en se chargeant en produit soluble, ressort à la partie supérieure de la cellule 1 et traverse successivement chacune des cellules jusqu'à traverser la cellule 6 qui est la dernière cellule et qui contient du café torréfié moulu frais.

A la sortie de la cellule 6 est donc obtenu l'extrait final qui va ensuite être filtré et éventuellement centrifugé puis évaporé et enfin transformé en poudre par lyophilisation ou atomisation.

Pour la mise en oeuvre du procédé selon l'invention, les cellules d'extraction sont divisées en un groupe de cellules chaudes, où la température peut être supérieure à 150°C, un groupe de cellules intermédiaires, où la température peut être supérieure à 130°C, et un groupe de cellules froides.

Selon le mode de réalisation préférentiel représenté à la figure unique, les cellules chaudes sont les cellules 1 et 2, les cellules intermédiaires sont les cellules 3 et 4 et les cellules froides sont les cellules 5 et 6.

Entre le groupe de cellules chaudes et le groupe de cellules intermédiaires est interposée, sur le circuit de l'extrait liquide, une première unité de traitement intercellulaire U1.

De même, entre le groupe de cellules intermédiaires et le groupe de cellules froides, est interposée une deuxième unité de traitement intercellulaire U2.

Chaque unité de traitement intercellulaire U1, U2 est constituée d'un évaporateur détendeur 7 comprenant un dispositif de réduction de pression suivi d'un évaporateur flash.

A la sortie de l'évaporateur détendeur est prévue une source 8 de liquide d'extraction servant à compenser en tout ou partie la perte de liquide engendrée par l'évaporation.

En aval de cette source 8 est enfin prévu un réchauffeur 9 de l'extrait traité.

Les exemples suivants vont illustrer la mise en oeuvre du procédé selon l'invention.

Exemple 1 :

Cet exemple illustre l'influence de la seconde évaporation, réalisée par la deuxième unité de traitement intercellulaire U2 sur la qualité du produit obtenu.

Une série d'essais a été réalisée avec une batterie d'extraction constituée de deux cellules chaudes, deux cellules intermédiaires et deux cellules froides. De l'eau à 180°C était introduite dans la cellule 1 la plus épuisée et un extrait liquide à 172°C ressortait de la cellule 2 pour être traité par la première unité de traitement intercellulaire U1.

Dans cette unité U1 la température d'évaporation flash a été fixée à 60°C.

Aucun liquide n'a été ajouté à l'extrait liquide traité à la sortie de l'unité U1 et, après réchauffement à 160°C, cet extrait liquide a été réintroduit dans la cellule 3 et est ressorti de la cellule 4 a 150°C.

Cet extrait liquide a ensuite été traité dans la seconde unité de traitement intercellulaire U2 et a été réchauffé à une température de 100°C pour être réintroduit dans la cellule froide 5.

Quatre essais ont été réalisés à quatre températures d'évaporation différentes dans l'unité U2. Les résultats sont résumés dans le tableau ci-dessous.

| Température d'évaporation flash dans l'unité U2 (°C) | Quantité d'eau évaporée (kg) par kg de café rôti moulu | Quantité d'eau ajoutée (kg) par kg de café rôti moulu |
|---|---|---|
| 60 | 0,31 | 1,7 |
| 70 | 0,22 | 1,6 |
| 80 | 0,18 | 1,5 |
| 90 | 0,11 | 1,4 |

Il est ainsi apparu une réduction de la force du goût du café quand la température d'évaporation baisse avec une augmentation concomitante de la pureté de l'arôme.

Une température entre 70°C et 80°C a finalement été préférée comme constituant un compromis satisfaisant.

Exemple 2 :

Cet exemple illustre l'influence du nombre de cellules intermédiaires sur, d'une part, la qualité du café, et, d'autre part, sur la fraction non soluble dans l'extrait final.

Dans cet exemple, tous les essais ont été réalisés avec un liquide d'extraction entrant à 180°C puis pénétrant dans la première cellule intermédiaire à 140°C et pénétrant dans la première cellule froide à 105°C. La température de la première évaporation, dans l'unité U1, est de 60°C, et la température de la deuxième évaporation, dans l'unité U2, est de 80°C. Aucun liquide n'est ajouté à l'extrait après la première unité U1 alors que 2 kg d'eau par kg de café rôti sont ajoutés à la sortie de la seconde unité U2.

Le tableau ci-dessous résume les différents essais réalisés.

| Nombre de cellules intermédiaires | Fraction non soluble dans l'extrait final (%) | Commentaires |
|---|---|---|
| 3 | 0,7 | Tasse très claire, goût très doux, un peu sec. |
| 2 | 1,2 | Tasse claire, goût doux et plein. |
| 1 | 2,1 | Tasse trouble, goût un peu amer. |

L'optimum choisi est donc de prendre deux cellules intermédiaires.

Exemple 3 :

Cet exemple illustre l'influence de l'addition d'eau après la première évaporation dans l'unité U1 sur l'épuisement final et sur la qualité du produit final.

Tous les essais ont été réalisés avec une deuxième température d'évaporation, dans l'unité U2, de 80°C, en rajoutant 2 kg d'eau par kg de café rôti après cette unité U2, le dispositif d'extraction comprenant deux cellules chaudes, deux cellules intermédiaires et deux cellules froides, le rendement d'épuisement étant identique dans tous les essais.

| Addition d'eau<br>après l'unité U1<br>(kg d'eau par kg<br>de café rôti moulu) | Fraction<br>non<br>soluble<br>(%) |
|---|---|
| 0 | 2,1 |
| 1,5 | 2,2 |
| 2,5 | 2,5 |

On observe ainsi une augmentation de la fraction non soluble qui est due à la diminution de l'effet de filtration dans les cellules intermédiaires.De plus, la qualité du produit final diminue en devenant plus âcre et plus dure.

Il est donc préférentiellement choisi de ne pas ajouter d'eau après la première évaporation.

Mais il est clair que ce paramètre permet de moduler la qualité du produit final en fonction du goût que l'on désire obtenir.

**Revendications**

1. Procédé de production d'un café instantané soluble en poudre dans lequel un liquide d'extraction est amené à percoler à contre-courant à travers des cellules remplies de café torréfié moulu, l'extrait final étant ensuite transformé en poudre, dans lequel un extrait produit par une ou plusieurs cellules chaudes à une température supérieure à 150°C est soumis à une première évaporation de type flash, l'extrait produit etant ensuite réintroduit dans le circuit d'extraction pour subir une seconde évaporation de type flash séparée de la précédente par au moins une cellule d'extraction intermédiaire, le produit de cette évaporation étant ensuite réintroduit dans les cellules froides du circuit d'extraction, caractérisé en ce que la première évaporation est réalisée à une température de 60°C et la seconde évaporation entre 70°C et 80°C.

2. Procédé selon la revendication 1 dans lequel est ajouté du liquide d'extraction après la seconde évaporation et avant la réintroduction dans les cellules froides.

3. Procédé selon la revendication 1 ou 2 dans lequel le liquide est réchauffé après chaque évaporation.

4. Procédé selon la revendication 1 ou 2 dans lequel est ajouté du liquide d'extraction après la première évaporation et avant la réintroduction dans les cellules intermédiaires.

**Claims**

1. A process for the production of soluble instant coffee powder in which an extraction liquid is circulated in countercurrent through cells filled with ground roasted coffee, the final extract then being converted into powder form, in which an extract produced in one or more hot cells at a temperature above 150°C is subjected to a first flash evaporation, the extract produced then being reintroduced into the extraction circuit to undergo a second flash evaporation separated from the first by at least one intermediate extraction cell, the product of this evaporation then being reintroduced into the cold cells of the extraction circuit, characterized in that the first evaporation is carried out at 60°C and the second evaporation at 80°C.

2. A process as claimed in claim 1, in which extraction liquid is added after the second evaporation and before reintroduction into the cold cells.

3. A process as claimed in claim 1 or 2, in which the liquid is reheated after each evaporation.

4. A process as claimed in claim 1 or 2, in which extraction liquid is added after the first evaporation and before reintroduction into the intermediate cells.

**EP 0 482 236 B1**

## Patentansprüche

1. Verfahren zur Herstellung von pulvrigem löslichem Instantkaffee, worin eine Extraktionsflüssigkeit durch Perkolieren im Gegenstrom durch mit gemahlenem gebranntem Kaffee gefüllte Kammern zugeführt wird, wobei der Endextrakt anschließend in ein Pulver übergeführt wird, in welchem Verfahren ein mit Hilfe von einer oder mehreren heißen Kammern mit einer Temperatur über 150°C erhaltener Extrakt einer ersten Flash-Verdampfung unterworfen wird, wobei der hergestellte Extrakt anschließend wieder in den Extraktionskreislauf eingeführt wird, um einer zweiten Flash-Verdampfung unterworfen zu werden, welche von der vorhergehenden mit Hilfe wenigstens einer zwischengeschalteten Extraktionskammer getrennt ist, wobei das Produkt dieser Verdampfung anschließend wieder in die kalten Kammern des Extraktionskreislaufes eingeführt wird, dadurch gekennzeichnet, daß die erste Verdampfung bei einer Temperatur von 60°C und die zweite Verdampfung zwischen 70°C und 80°C durchgeführt werden.

2. Verfahren nach Anspruch 1, worin nach der zweiten Verdampfung und vor der Wiedereinführung in die kalten Kammern Extraktionsflüssigkeit zugesetzt wird.

3. Verfahren nach Anspruch 1 oder 2, worin die Flüssigkeit nach jeder Verdampfung wiedererhitzt wird.

4. Verfahren nach Anspruch 1 oder 2, worin die Extraktionsflüssigkeit nach der ersten Verdampfung und vor der Wiedereinführung in die Zwischenkammern zugesetzt wird.

7

Figure unique